(19) Europäisches Patentamt / European Patent Office / Office européen des brevets

(11) **EP 4 668 369 A1**

(12) **EUROPEAN PATENT APPLICATION**

(43) Date of publication:
**24.12.2025 Bulletin 2025/52**

(21) Application number: **25183554.2**

(22) Date of filing: **18.06.2025**

(51) International Patent Classification (IPC):
***H01M 4/62*** (2006.01) ***H01M 4/04*** (2006.01)
***H01M 4/131*** (2010.01) ***H01M 4/136*** (2010.01)
***H01M 4/1391*** (2010.01) ***H01M 4/1397*** (2010.01)
***H01M 10/0525*** (2010.01) *H01M 4/02* (2006.01)

(52) Cooperative Patent Classification (CPC):
**H01M 4/622; H01M 4/0404; H01M 4/131; H01M 4/136; H01M 4/1391; H01M 4/1397; H01M 10/0525;** H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.06.2024 KR 20240081392**

(71) Applicant: **SAMSUNG SDI CO., LTD.**
**Yongin-si, Gyeonggi-do 17084 (KR)**

(72) Inventors:
- **CHOI, Jewon**
  **17084 Gyeonggi-do (KR)**
- **KIM, Eunji**
  **17084 Gyeonggi-do (KR)**
- **CHO, Yunshik**
  **17084 Gyeonggi-do (KR)**
- **JUNG, Kyunghwa**
  **17084 Gyeonggi-do (KR)**
- **LEE, Kukjoo**
  **17084 Gyeonggi-do (KR)**
- **PARK, Sujin**
  **17084 Gyeonggi-do (KR)**
- **CHO, Minho**
  **17084 Gyeonggi-do (KR)**
- **LEE, Jungmin**
  **17084 Gyeonggi-do (KR)**
- **NAM, Junghyun**
  **17084 Gyeonggi-do (KR)**

(74) Representative: **Michalski Hüttermann & Partner Patentanwälte mbB**
**Kaistraße 16A**
**40221 Düsseldorf (DE)**

# (54) POSITIVE ELECTRODE, PREPARATION METHOD THEREOF, AND RECHARGEABLE LITHIUM BATTERIES

(57) Disclosed are a positive electrode, a preparation method thereof, and a rechargeable lithium battery including the same, the positive electrode including a positive electrode current collector; and a positive electrode active material layer located on the positive electrode current collector and including a positive electrode active material, a binder, and a conductive material; wherein the binder includes a first binder and a second binder, the first binder is a hydrogenated nitrile butadiene rubber, the second binder includes an imide-based binder, and the positive electrode active material layer includes about 300 to about 1,300 parts by weight of the second binder based on 100 parts by weight of the first binder.

FIG. 1

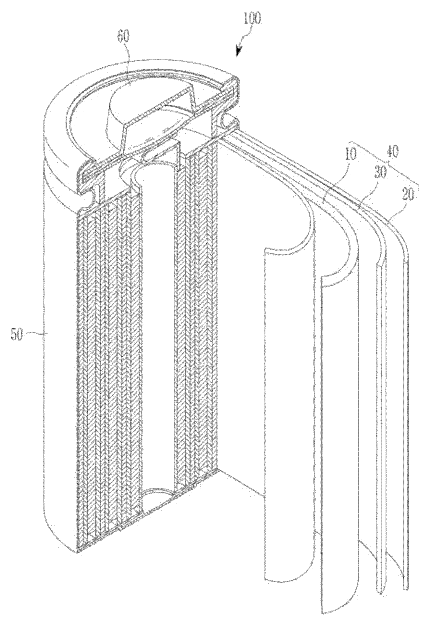


EP 4 668 369 A1

## Description

## BACKGROUND

### 1. Field

Positive electrodes and preparation methods thereof, and rechargeable lithium batteries including the same are disclosed.

### 2. Description of the Related Art

A portable information device such as a cell phone, a laptop, smart phone, and the like or an electric vehicle has used a rechargeable lithium battery having high energy density and easy portability as a driving power source. Particularly, research has been actively conducted to use a rechargeable lithium battery with high energy density as a driving power source or power storage power source for hybrid or electric vehicles.

Rechargeable lithium batteries include a positive electrode and a negative electrode including an active material capable of intercalating and deintercalating lithium ions, and an electrolyte solution, and electrical energy is produced through oxidation and reduction reactions when lithium ions are intercalated/deintercalated from the positive electrode and negative electrode.

Transition metal compounds such as lithium cobalt-based oxide, lithium nickel-based oxide, and lithium manganese-based oxide are mainly used as positive electrode active materials for rechargeable lithium batteries, and crystalline carbon materials such as natural graphite or artificial graphite or amorphous carbon materials are used as negative electrode active materials.

## SUMMARY

Some example embodiments provide a positive electrode and a rechargeable lithium battery having excellent cycle-life characteristics, which can reduce resistance and improve adhesion and compressibility by improving dispersibility of a conductive material.

In some example embodiments, a positive electrode includes a positive electrode current collector; and a positive electrode active material layer located on the positive electrode current collector and including a positive electrode active material, a binder, and a conductive material; wherein the binder includes a first binder and a second binder, the first binder includes a hydrogenated nitrile butadiene rubber, the second binder includes an imide-based binder, and the positive electrode active material layer includes about 300 to about 1,300 parts by weight of the second binder based on 100 parts by weight of the first binder.

In some example embodiments, a method of preparing a positive electrode includes preparing a positive electrode slurry including a positive electrode active material, a binder, and a conductive material, coating the positive electrode slurry on the positive electrode current collector to form a positive electrode, wherein the binder includes a first binder and a second binder, the first binder includes a hydrogenated nitrile butadiene rubber, the second binder includes an imide-based binder, the positive electrode slurry includes about 300 to about 1,300 parts by weight of the second binder based on 100 parts by weight of the first binder.

In some example embodiments, a rechargeable lithium battery including the aforementioned positive electrode, a negative electrode, and an electrolyte is provided.

According to some example embodiments, the positive electrode can reduce resistance and improve adhesion and compressibility by improving dispersibility of the conductive material. A rechargeable lithium battery including the positive electrode can implement excellent cycle-life characteristics.

## BRIEF DESCRIPTION OF THE DRAWINGS

FIGS. 1 to 4 are cross-sectional views schematically showing rechargeable lithium batteries according to some example embodiments.

FIG. 5 shows the IR analysis results for the binder prepared in Preparation Example 1.

FIG. 6 shows the IR analysis results for the binder prepared in Preparation Example 3.

FIG. 7 shows the results of measuring the mixture resistance of the positive electrode plates manufactured in Examples 1, 2, and Comparative Example 1.

FIG. 8 shows the results of measuring the interfacial resistance for the rechargeable lithium battery cells manufactured in Examples 1, 2, and Comparative Example 1.

FIG. 9 are cross-sectional views schematically showing positive electrodes according to some example embodiments.

## DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image.

The weight average molecular weight (Mw) may be measured by a method well known to those skilled in the art comprising Gel Permeation Chromatography (GPC) or Size Exclusion Chromatography (SEC). For example, the weight average molecular weight (Mw) may be measured by using gel permeation chromatography (GPC) with tetrahydrofuran (THF) as an eluent at 40°C, using polystyrene standards for calibration. a weight average molecular weight (Mw).

Herein, "or" is not to be construed as an exclusive meaning, for example, "A or B" is construed to include A, B, A+B, and the like.

"Metal" is interpreted as a concept including ordinary metals, transition metals and metalloids (semi-metals).

As used herein, when a definition is not otherwise provided, "substituted" refers to replacement of at least one hydrogen by a substituent of deuterium, a halogen (F, Cl, Br, I), a hydroxy group or a salt thereof, a C1 to C20 alkoxy group, a nitro group, a cyano group, an amine group, an imino group, an azido group, an amidino group, a hydrazino group, a hydrazono group, a carbonyl group, a carbamyl group, a thiol group or a salt thereof, a thioether group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof. For example, "substituted" may mean that at least one hydrogen atom is replaced with a substituent that is deuterium, a halogen, a C1 to C20 alkyl group, a C6 to C20 aryl group, a C3 to C20 heteroaryl group, or a combination thereof.

Here, the alkyl group may be a C1 to C20 alkyl group, a C1 to C10 alkyl group, or a C1 to C5 alkyl group, and the aryl group may be a C6 to C20 aryl group, or a C6 to C10 aryl group.

## Positive Electrode

In some example embodiments, a positive electrode includes a positive electrode current collector; and a positive electrode active material layer located on the positive electrode current collector and including a positive electrode active material, a binder, and a conductive material; wherein the binder includes a first binder and a second binder, the first binder

includes a hydrogenated nitrile butadiene rubber, the second binder includes an imide-based binder, the positive electrode active material layer includes about 300 to about 1,300 parts by weight of the second binder based on 100 parts by weight of the first binder.

FIG. 9 illustrates a cross-sectional view schematically showing the structure of a positive electrode according to an embodiment. The positive electrode includes a positive electrode current collector 101; and a positive electrode active material layer 102 on the positive electrode current collector. The positive electrode current collector may include Al, SUS, or a combination thereof, but is not limited thereto.

The positive electrode active material layer includes a positive electrode active material, a binder, and a conductive material. The binder used in the positive electrode active material layer serves to adhere the positive electrode active material particles to each other and the positive electrode active material to the current collector. As such a binder, a fluorine-based binder such as polyvinylidene fluoride (PVDF) is mainly used. However, due to recent environmental issues, there is a need to replace fluorine-based binders such as PVDF with more environmentally friendly materials.

As part of the need for such environment-friendly research, binders that do not include fluorine atoms are required, but most binders that do not include fluorine atoms have a problem of insufficient adhesiveness and do not meet the level of PVDF. In addition, fluorine-based binders such as PVDF have strong oxidation resistance, making it difficult to develop a positive electrode binder that can replace them. In particular, in the case of positive electrode active materials with small particle sizes, such as lithium iron phosphate (LFP) or lithium manganese iron phosphate (LMFP), it is difficult to achieve high density. Therefore, in order to achieve high density, it is necessary to develop a binder with excellent compressibility that can be pressed well during compression.

Accordingly, even if the aforementioned properties, such as adhesiveness or compressibility, are improved to some extent by using a binder that does not contain fluorine atoms, there are problems, such as insufficient dispersibility or oxidation resistance of a conductive material, or changes in the physical properties regarding the electrolyte solution.

Accordingly, in some example embodiments, an object is to provide a positive electrode capable of improving the performance of a battery by introducing a binder that does not include fluorine atoms, yet has excellent adhesion or compressibility, excellent dispersibility of a conductive material, and low expansion rate for an electrolyte solution, into the positive electrode.

To achieve this, the binder uses two types of binders including a first binder and a second binder. At this time, the first binder and the second binder may not include fluorine.

The first binder used in the positive electrode includes a hydrogenated nitrile butadiene rubber (H-NBR). In this way, by using the hydrogenated nitrile butadiene rubber, the dispersibility of a conductive material can be improved.

In some example embodiments, the hydrogenated nitrile butadiene rubber may have a weight average molecular weight (Mw) of about 100,000 g/mol to about 2,000,000 g/mol, for example about 100,000 g/mol to about 1,800,000 g/mol, about 100,000 g/mol to about 1,500,000 g/mol, or about 900,000 g/mol to about 1,500,000 g/mol. If this is met, the effect of improving the dispersibility of the conductive material can be maximized.

For example, the hydrogenated nitrile butadiene rubber may include about 20 wt % to about 40 wt %, for example about 21 wt % to about 37 wt %, or about 22 wt % to about 35 wt % of acrylonitrile or methacrylonitrile. Oxidation resistance or dispersibility of a conductive material can be further improved.

In the positive electrode, the second binder includes an imide-based binder. By using the imide-based binder as a second binder used in combination with a first binder, flexibility can be imparted to the positive electrode plate, thereby enabling effective surface adhesion between each component, thereby improving adhesive strength. In addition, high-density compressing may be possible due to the high flexibility of the second binder, so that excellent compressibility can be secured while also achieving high density.

Meanwhile, the imide-based binder refers to a polymer including an imide group within the structure of a repeating unit. For example, the imide-based binder may further include an additional functional group including an amide group, a urethane group, a urea group, or a combination thereof in addition to the imide group, and, for example, may further include the additional functional group described above in addition to the imide group within the structure of the repeating unit.

For example, the second binder may include polyimide, poly(imide-amide), poly(imide-urethane), poly(imide-urea), or a combination thereof. Here, the polyimide may refer to a polymer that does not include an amide group, urethane group, or urea group described later in the structure of the repeating unit, but includes an imide group. Additionally, the poly(imide-amide) may represent a polymer including an imide group and an amide group within the structure of the repeating unit. The poly(imide-urethane) may refer to a polymer including an imide group and a urethane group within the structure of the repeating unit, and the poly(imide-urea) may refer to a polymer including an imide group and a urea group within the structure of the repeating unit. The aforementioned second binder is a binder having excellent flexibility, and when such a second binder is used, the effects of improving adhesion or compressibility, reducing expansion rate for an electrolyte solution, and improving elongation can be harmoniously achieved.

In some example embodiments, the second binder may include at least one of a structure represented by Chemical Formula 1A and a structure represented by Chemical Formula 1B, or the imide group may be represented by Chemical Formula 1A or Chemical Formula 1B. If this is satisfied, it may be advantageous in reducing the expansion of the

electrolyte solution.

[Chemical Formula 1A]

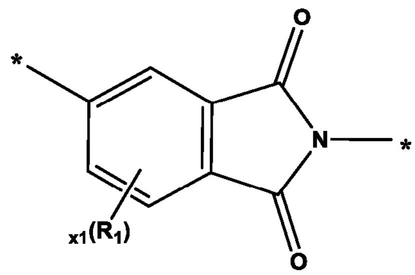

In Chemical Formula 1A, $R_1$ represents hydrogen, deuterium, or a substituted or unsubstituted alkyl group, x1 is an integer from 0 to 3, and * represents a linking portion.

[Chemical Formula 1B]

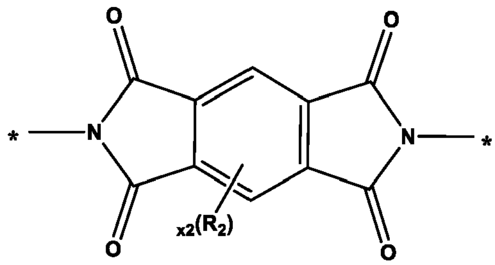

In Chemical Formula 1B, $R_2$ is hydrogen, deuterium, or a substituted or unsubstituted alkyl group, x2 is an integer from 0 to 2, and * represents a linking portion.

For example, the second binder may include at least one of a structure represented by Chemical Formula 2A and a structure represented by Chemical Formula 2B.

[Chemical Formula 2A]

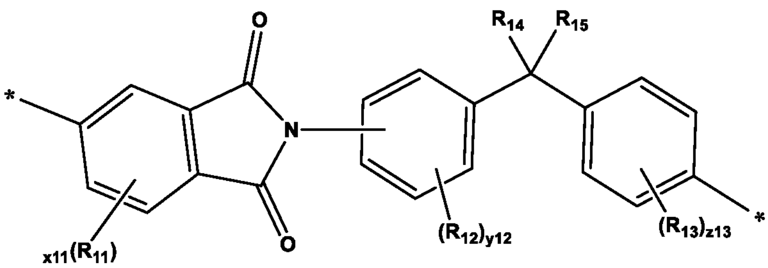

In Chemical Formula 2A, $R_{11}$ to $R_{15}$ are each independently hydrogen, deuterium, or a substituted or unsubstituted alkyl group, x11 is an integer ranging from 0 to 3, y12 and z13 are each independently an integer ranging from 0 to 4, and * represents a linking portion.

[Chemical Formula 2B]

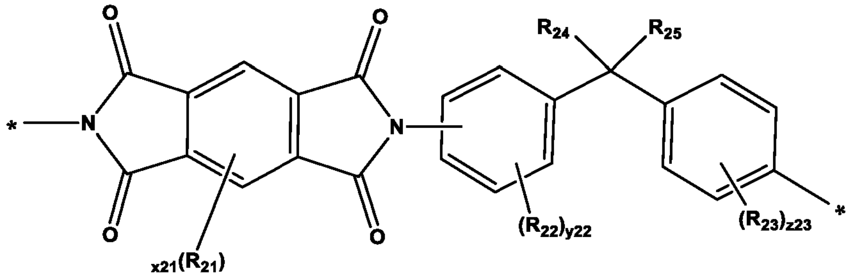

In Chemical Formula 2B, $R_{21}$ to $R_{25}$ are each independently hydrogen, deuterium, or a substituted or unsubstituted alkyl group, x21 is an integer ranging from 0 to 2, y22 and z23 are each independently an integer ranging from 0 to 4, and * represents a linking portion.

For example, the second binder may include at least one of a structure represented by Chemical Formula 3A and a structure represented by Chemical Formula 3B.

[Chemical Formula 3A]

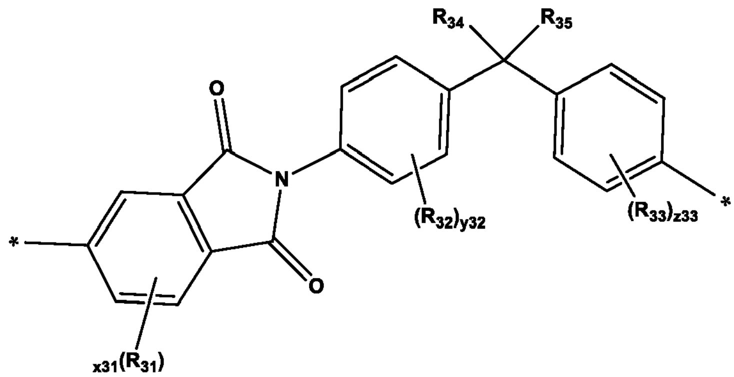

**In** Chemical Formula 3A, $R_{31}$ to $R_{35}$ are each independently hydrogen, deuterium, or a substituted or unsubstituted alkyl group, x31 is an integer ranging from 0 to 3, y32 and z33 are each independently an integer ranging from 0 to 4, and * represents a linking portion.

[Chemical Formula 3B]

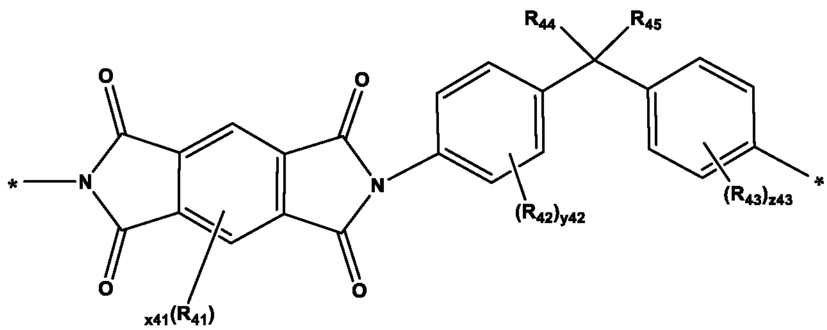

In Chemical Formula 3B, $R_{41}$ to $R_{45}$ are each independently hydrogen, deuterium, or a substituted or unsubstituted alkyl group, x41 is an integer ranging from 0 to 2, y42 and z43 are each independently an integer ranging from 0 to 4, and * represents a linking portion.

For example, the second binder may comprise at least one of the structures represented by Chemical Formulas 4A to 4C.

[Chemical Formula 4A]

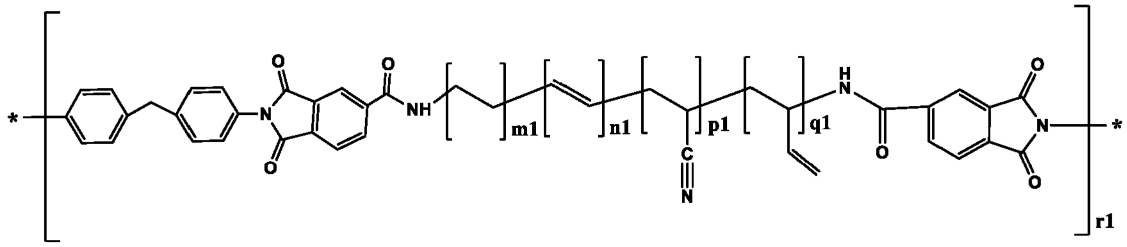

In Chemical Formula 4A, m1, n1, p1, q1, and r1 may each independently be an integer from 0 to 50.

[Chemical Formula 4B]

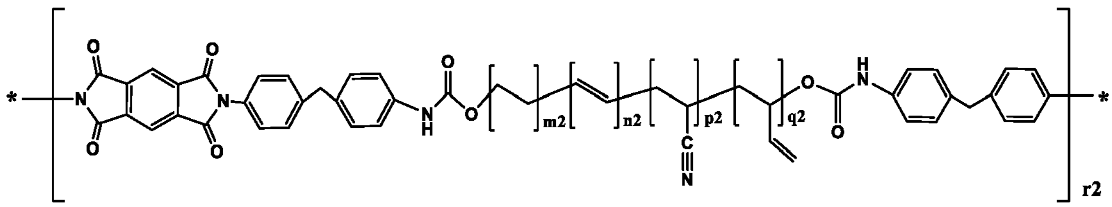

In Chemical Formula 4B, m2, n2, p2, q2, and r2 may each independently be an integer from 0 to 50.

[Chemical Formula 4C]

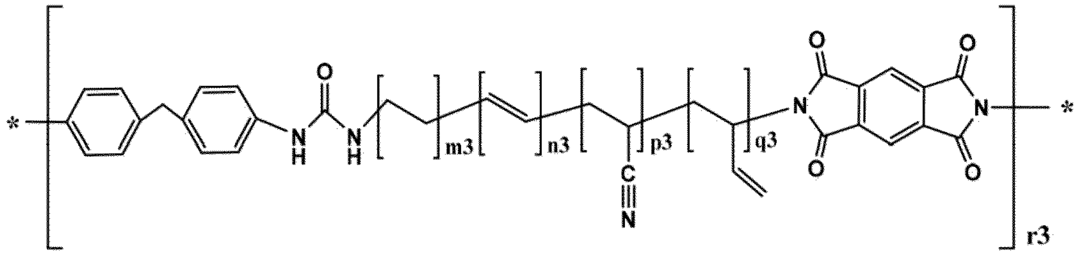

In Chemical Formula 4C, m3, n3, p3, q3, and r3 may each independently be an integer from 0 to 50.

For example, in Chemical Formula 4A, m1, n1, p1, and q1 may each independently be an integer from 1 to 50, or r1 may be an integer from 1 to 50, an integer from 2 to 50, or an integer from 3 to 50.

For example, in Chemical Formula 4B, m2, n2, p2, and q2 may each independently be an integer from 1 to 50, or r2 may be an integer from 1 to 50, an integer from 2 to 50, or an integer from 3 to 50.

For example, in Chemical Formula 4C, m3, n3, p3, and q3 may each independently be an integer from 1 to 50, or r3 may be an integer from 1 to 50, an integer from 2 to 50, or an integer from 3 to 50.

In some example embodiments, the second binder may have a weight average molecular weight (Mw) of about 50,000 g/mol to about 1,000,000 g/mol. If this is met, the effect of improving adhesion and compressibility may be maximized.

For example, the second binder may have an expansion ratio with respect to the electrolyte solution of about 10 wt% to about 50 wt%, for example about 10 wt% to about 40 wt%, about 10 wt% to about 38 wt%, about 15 wt% to about 35 wt%, about 25 wt% to about 35 wt%, or about 28 wt% to about 33 wt%. Here, the expansion ratio for the electrolyte solution may be the value of P calculated by Equation 1 for a film manufactured with the second binder.

[Equation 1]

$$P = (P2 - P1)/P1 \times 100$$

In Equation 1, P1 represents the film weight before expansion, and P2 represents the film weight after expansion.

In some example embodiments the second binder may have an elastic elongation after 24 hours of immersion in the electrolyte solution of about 10% to about 200%, for example about 10% to about 180%, about 10% to about 150%, or about 40% to about 160%. Here, the elastic elongation after immersion in the electrolyte solution for 24 hours may be the value of C calculated by Equation 2 when the film manufactured with the second binder is elongated after immersion in the electrolyte solution for 24 hours.

[Equation 2]

$$E = (E2-E1)/E1 \times 100$$

In Equation 2, E2 represents the film length after elongation, and E1 represents the film length before elongation.

The positive electrode active material layer may reduce resistance through improved dispersibility of a conductive material, improve adhesion or compressibility, and reduce expandability when immersed in an electrolyte solution for a long time, and also secure excellent elastic elongation a binder, by using the aforementioned first binder and second binder in combination as a binder.

The aforementioned positive electrode active material layer may include about 300 to about 1,300 parts by weight, for example about 500 parts by weight to about 1200 parts by weight, or about 800 parts by weight to about 1000 parts by weight of the second binder based on 100 parts by weight of the first binder. In this range, the effects of improving the dispersibility of the conductive material and reducing resistance by adding the first binder and the effects of securing the adhesion or compressibility by adding the second binder can be harmoniously achieved.

For example, the positive electrode active material layer may include about 3 wt% to about 20 wt% of the first binder, for example about 7 wt% to about 18 wt%, or about 10 wt% to about 15 wt% based on 100 wt% of the total of the first binder and the second binder. In this range, the effect of reducing resistance and improving battery cycle-life performance through improved dispersibility of a conductive material by the first binder may be maximized.

For example, the positive electrode active material layer may include about 80 wt% to about 97 wt%, for example, about 82 wt% to about 93 wt%, or about 85 wt% to about 90 wt% of the second binder based on 100 wt% of the total of the first binder and the second binder. In this range, the effect of improving adhesion or compressibility by the second binder may be maximized.

For example, the positive electrode may have a loading level of about 30 $mg/cm^2$ to about 60 $mg/cm^2$, or a three-point bending strength of less than or equal to about 1.1 N, or a compression density of greater than or equal to about 2.4 g/cc.

For example, the positive electrode active material layer may further include an additional binder in addition to the aforementioned first binder and second binder. As these additional binders, binders commonly used in the art can be used without limitation. Examples of the additional binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto.

In some example embodiments, an amount of the binder may be about 0.5 wt% to about 5 wt%, about 0.8 wt% to about 4 wt%, or about 1 wt% to about 3 wt% based on 100 wt% of the positive electrode active material layer. Here, the amount of the binder may be the total binder amount in the positive electrode active material layer.

The positive electrode active material layer includes a positive electrode active material and a conductive material in addition to the aforementioned binder component.

Positive Electrode Active Material

The positive electrode active material may be a compound capable of reversible intercalation and deintercalation of lithium (lithiated intercalation compound). Specifically, one or more types of composite oxides of lithium and a metal selected from cobalt, manganese, nickel, or a combination thereof may be used.

In some example embodiments, the positive electrode active material can be a lithium transition metal composite oxide, and may include, for example, a lithium nickel-based oxide, a lithium cobalt-based oxide, a lithium manganese-based oxide, a lithium composite phosphate, a lithium nickel-manganese-based oxide, a lithium-manganese-rich oxide, or a combination thereof.

As a more specific example, a compound represented by any of the following chemical formulas may be used. $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < a < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$,

$0 < a < 2$);$Li_aNi_bCo_cL^1_dGeO_2$ ($0.90 \le a \le 1.8, 0 \le b \le 0.9, 0 \le c \le 0.5, 0 \le d \le 0.5, 0 \le e \le 0.1$); $Li_aNiG_bO_2$ ($0.90 \le a \le 1.8, 0.001 \le b \le 0.1$); $Li_aCoG_bO_2$ ($0.90 \le a \le 1.8, 0.001 \le b \le 0.1$); $Li_aMn_{1-b}G_bO_2$ ($0.90 \le a \le 1.8, 0.001 \le b \le 0.1$); $Li_aMn_2G_bO_4$ ($0.90 \le a \le 1.8, 0.001 \le b \le 0.1$); $Li_aMn_{1-g}G_gPO_4$ ($0.90 \le a \le 1.8, 0 \le g \le 0.5$); $Li_{(3-f)}Fe_2(PO_4)_3$ ($0 \le f \le 2$); $Li_aFePO_4$ ($0.90 \le a \le 1.8$)

in the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and $L^1$ is Mn, Al or a combination thereof.

For example, the positive electrode active material may include a lithium composite phosphate, and the lithium composite phosphate may include at least one compound represented by Chemical Formulas 11 to 15. The positive electrode active material including the lithium composite phosphate has a particle size of less than or equal to about 2 μm, which makes it difficult to achieve high density. However, when used in combination with a binder according to some example embodiments, the energy density of the positive electrode can be maximized while simultaneously securing the adhesive strength and flexibility of the electrode plate.

[Chemical Formula 11] $Li_{a1}Fe_{(1-s1)}M^1_{s1}PO_4$

In Chemical Formula 11, $0.90 \le a1 \le 1.5$, $0 \le s1 \le 0.4$, and $M^1$ is Al, Ca, Ce, Cr, Cu, La, Mg, Mn, Mo, Nb, Ni, Sn, Sr, Ti, V, W, Y, Zn, Zr, or a combination thereof. Here, $0.90 \le a1 \le 1.5$, for example, $0.90 \le a1 \le 1.2$, or $0.95 \le a1 \le 1.1$. Additionally, $0 \le s1 \le 0.4$, $0 \le s1 \le 0.3$, $0 \le s1 \le 0.2$, $0 \le s1 \le 0.1$ or $0 \le s1 \le 0.05$.

[Chemical Formula 12] $Li_{a2}Mn_{s2}Fe_{(1-s2-t2)}M^2_{t2}PO_4$

In Chemical Formula 12, $0.90 \le a2 \le 1.5$, $0.1 \le s2 \le 0.9$, $0 \le t2 \le 0.9$, and $M^2$ is Al, Ca, Ce, Cr, Cu, La, Mg, Mo, Nb, Ni, Sn, Sr, Ti, V, W, Y, Zn, Zr, or a combination thereof. Here, $0.90 \le a2 \le 1.5$, for example $0.90 \le a2 \le 1.2$, or $0.95 \le a2 \le 1.1$. Additionally, $0.1 \le s2 \le 0.9$, $0.3 \le s2 \le 0.9$, or $0.4 \le s2 \le 0.8$, $0 \le t2 \le 0.9$, $0 \le t2 \le 0.4$, $0 \le t2 \le 0.3$, $0 \le t2 \le 0.2$, $0 \le t2 \le 0.1$, or $0 \le t2 \le 0.05$.

[Chemical Formula 13] $Li_{a3}Mn_{(1-s3)}M^3_{s3}PO_4$

In Chemical Formula 13, $0.90 \le a3 \le 1.5$, $0 \le s3 \le 0.4$, and $M^3$ is Al, Ca, Ce, Cr, Cu, La, Mg, Mo, Nb, Ni, Sn, Sr, Ti, V, W, Y, Zn, Zr, or a combination thereof. Here, $0.90 \le a3 \le 1.5$, for example $0.90 \le a3 \le 1.2$, or $0.95 \le a3 \le 1.1$. Additionally, $0 \le s3 \le 0.4$, $0 \le s3 \le 0.3$, $0 \le s3 \le 0.2$, $0 \le s3 \le 0.1$, or $0 \le s3 \le 0.05$.

[Chemical Formula 14] $Li_{a4}Ti_{(2-s4)}M^4_{s4}(PO_4)_3$

In Chemical Formula 14, $0.90 \le a4 \le 1.5$, $0 \le s4 \le 0.4$, and $M^4$ is Al, Ca, Ce, Cr, Cu, La, Mg, Mo, Nb, Ni, Sn, Sr, V, W, Y, Zn, Zr, or a combination thereof. Here, $0.90 \le a4 \le 1.5$, for example $0.90 \le a4 \le 1.2$, or $0.95 \le a4 \le 1.1$. Additionally, $0 \le s4 \le 0.4$, $0 \le s4 \le 0.3$, $0 \le s4 \le 0.2$, $0 \le s4 \le 0.1$, or $0 \le s4 \le 0.05$.

[Chemical Formula 15] $Li_{a5}Ti_{(1-s5)}M^5_{s5}PO_5$

In Chemical Formula 15, $0.90 \le a5 \le 1.5$, $0 \le s5 \le 0.4$, and $M^5$ is Al, Ca, Ce, Cr, Cu, La, Mg, Mo, Nb, Ni, Sn, Sr, V, W, Y, Zn, Zr, or a combination thereof. Here, $0.90 \le a5 \le 1.5$, for example $0.90 \le a5 \le 1.2$, or $0.95 \le a5 \le 1.1$. Additionally, $0 \le s5 \le 0.4$, $0 \le s5 \le 0.3$, $0 \le s5 \le 0.2$, $0 \le s5 \le 0.1$, or $0 \le s5 \le 0.05$.

More specifically, the lithium composite phosphate may include $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, $LiMnPO_4$, LiTiPOs, $LiTi_2(PO_4)_3$, or a combination thereof.

As an example, the positive electrode active material may include lithium iron phosphate, lithium manganese iron phosphate, or a combination thereof, for example a compound represented by Chemical Formula 11, a compound represented by Chemical Formula 12, or a combination thereof. This positive electrode active material can secure cost reduction and safety effects and realize high output characteristics, and when combined with a binder according to some example embodiments, it can increase the energy density of the positive electrode and improve the adhesive strength and flexibility of the electrode plate.

The lithium composite phosphate is in the form of particles, and the average particle diameter ($D_{50}$) of the particles may be about 0.01 μm to about 2 μm, for example, about 0.1 μm to about 1 μm, or about 0.5 μm to about 1 μm.

In some example embodiments, the lithium composite phosphate may be in the form of first particles, second particles, or a mixture of first particles and second particles.

The first particles may be an assembly of a plurality of nano-sized primary particles or secondary particles. The first particles may have a spherical or elliptical shape as the primary particles are closely agglomerated with each other. The average particle diameter of the first particles may be, for example, about 2 μm to about 15 μm, about 3 μm to about 12

μm, or about 3 μm to about 10 μm. The average particle diameter of the first particles may be larger than the average particle diameter of the second particles, which will be described later. The average particle diameter of the primary particle size of the first particles may be, for example, about 10 nm to about 400 nm, about 20 nm to about 300 nm, or about 50 nm to about 200 nm. As an example, the average particle diameter of the first particles may be measured by randomly selecting about 30 first particles from an electron microscope image of lithium composite phosphate, and in the particle size distribution, the diameter ($D_{50}$) of particles with a cumulative volume of 50% by volume may be taken as the average particle diameter. The average particle diameter of the primary particles of the first particle may be determined by measuring the size of about 30 primary particles in an electron microscope image of the surface or cross-section of the first particle and in the particle size distribution, the diameter ($D_{50}$) of particles with a cumulative volume of 50 volume% may be taken as the average particle diameter.

The porosity of the first particles may be about 20% to about 50%. As an example, the porosity may be obtained by measuring the area ratio of the portion occupied by pores within the particle using an image analysis program such as Image J in a scanning electron microscope image of the cross-section of the first particle.

The second particle may have the form of a single particle. The average particle diameter of the second particles may be, for example, about 10 nm to about 900 nm, about 50 nm to about 500 nm, or about 100 nm to about 300 nm. The average particle diameter of the second particles may be smaller than the average particle diameter of the first particles, and may be equal to or larger than the average particle diameter of the primary particles of the first particles. As an example, the average particle diameter of the second particles may be measured by randomly selecting about 30 second particles from an electron microscope image of lithium composite phosphate, and in the particle size distribution, the diameter ($D_{50}$) of particles with a cumulative volume of 50% by volume may be taken as the average particle diameter.

The lithium composite phosphate may further include a carbon coating layer on the surface of the particle. The carbon coating layer can lower the resistance of the positive electrode by improving the electrical conductivity of the lithium composite phosphate. The carbon coating layer may be formed, for example, using at least one raw material selected from glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch-based resin, and a tar-based resin. Specifically, the carbon coating layer may be formed through a sintering process after placing the raw materials on the surface of the lithium composite phosphate particles.

As another example, the positive electrode active material may include a cobalt-based positive electrode active material having a cobalt content of greater than or equal to about 30 mol%, greater than or equal to about 50 mol%, or greater than or equal to about 80 mol% based on 100 mol% of metals excluding lithium in the lithium transition metal composite oxide.

As another example, the positive electrode active material may include a high nickel-based positive electrode active material having a nickel content of greater than or equal to about 80 mol% based on 100 mol% of metals excluding lithium in the lithium transition metal composite oxide. The nickel content in the high-nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of metals excluding lithium. The high-nickel-based positive electrode active materials can achieve high capacity and can be applied to high-capacity, high-density rechargeable lithium batteries.

Conductive Material

A conductive material is used to provide conductivity to an electrode, and in the battery being constructed, any electronically conductive material can be used as long as it does not cause chemical change. Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

As an example, the conductive material may include particulate nano-carbon containing carbon black, acetylene black, ketjen black, or a combination thereof, or it may include fibrous nano-carbon including carbon nanofibers, carbon nanotubes, or a combination thereof, and for example, it may include both particulate nano-carbon and fibrous nano-carbon.

In some example embodiments, an amount of the conductive material may be about 0.5 wt% to about 5 wt%, or about 1 wt% to about 3 wt% based on 100 wt% of the positive electrode active material layer.

**Method of Preparing Positive Electrode**

In some example embodiments, a method of preparing a positive electrode includes preparing a positive electrode slurry including a positive electrode active material, a binder, and a conductive material, coating the positive

electrode slurry on the positive electrode current collector to form a positive electrode, wherein the binder includes a first binder and a second binder, the first binder includes a hydrogenated nitrile butadiene rubber, the second binder includes an imide-based binder, and the positive electrode slurry includes about 300 to about 1,300 parts by weight of the second binder based on 100 parts by weight of the first binder.

First, a positive electrode slurry including a positive electrode active material, a binder, and a conductive material is prepared. Here, the aforementioned explanation may be equally applied to the positive electrode active material, binder, and conductive material.

The binder includes a first binder and a second binder, the first binder includes a hydrogenated nitrile butadiene rubber, and the second binder includes an imide-based binder. At this time, the aforementioned description can be equally applied to the first binder and the second binder.

The aforementioned positive electrode slurry may include about 300 to about 1,300 parts by weight, for example, about 500 to about 1,200 parts by weight, or about 800 to about 1,000 parts by weight of the second binder based on 100 parts by weight of the first binder.

In some example embodiments, the preparation of the positive electrode slurry may include mixing a first binder, a conductive material, and a solvent to prepare a conductive material dispersion, adding a second binder to the conductive material dispersion to prepare a mixture, and adding a positive electrode active material to the mixture and mixing them. By introducing a process of preparing a conductive dispersion by first adding the first binder and the conductive material to a solvent and mixing them before mixing the second binder with the positive electrode slurry components such as the positive electrode active material and the conductive material, the problem of the dispersibility of a conductive material being deteriorated due to the use of the highly flexible second binder may be prevented, thereby improving dispersibility of a conductive material. Due to this, the adhesion or compressibility of the positive electrode plate may be improved, while the interfacial resistance and the mixture resistance may be reduced, thereby effectively obtaining a rechargeable battery having long cycle-life characteristics.

Subsequently, the positive electrode slurry may be applied onto the positive electrode collector to form the positive electrode. At this time, the process of forming the positive electrode may further include drying and compressing the positive electrode slurry after coating the positive electrode slurry.

## Rechargeable Lithium Battery

Some example embodiments provide a rechargeable lithium battery including the aforementioned positive electrode, negative electrode, and electrolyte. As an example, a rechargeable lithium battery may include a positive electrode, a negative electrode, a separator between the positive electrode and the negative electrode, and an electrolyte solution.

The rechargeable lithium battery may be classified into cylindrical, prismatic, pouch, coin, etc. depending on the shape. FIGS. 1 to 4 are schematic diagrams showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

## Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon

may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0<x\leq2$), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, $SnO_2$, a Sn alloy, or a combination thereof.

The silicon-carbon composite may be a composite of silicon and amorphous carbon. An average particle diameter ($D_{50}$) of the silicon-carbon composite particles may be, for example, about 0.5 μm to about 20 μm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, a silicon content may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 μm, or about 10 nm to about 200 nm. The silicon particles may exist as silicon alone, in the form of a silicon alloy, or in an oxidized form. The oxidized form of silicon may be represented by $SiO_x$ ($0<x\leq2$). At this time, the atomic content ratio of Si:O, which indicates a degree of oxidation, may be about 99:1 to about 33:67. As used herein, when a definition is not otherwise provided, an average particle diameter ($D_{50}$) indicates a particle where a cumulative volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 μm to about 20 μm, about 5 μm to about 15 μm, or about 7 μm to about 10 μm.

## Electrolyte

For example, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those skilled in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)$

($C_yF_{2y+1}SO_2$) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus excellent performance can be achieved and lithium ions can move effectively.

## Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or a mixture of two or more thereof.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth) acrylamide, and a second structural unit including at least one of a structural unit derived from (meth)acrylic acid or (meth) acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Examples and comparative examples of the present disclosure are described below. However, the following examples are only examples of the present disclosure, and the present disclosure is not limited to the following examples.

## Second Binder Preparation Example 1

In a 100 mL 2-neck round bottom flask substituted with nitrogen gas, after adding NMP, 0.002 mol of trimellitic anhydride chloride and 0.003 mol of 4,4-oxydiphthalic anhydride were added thereto and then, dissolved in NMP by heating after installing a reflux device. In another 100 mL 1-neck round bottom flask, after adding NMP, methylenediphenyl 4,4'-diisocyanate (0.004 mol) and 1,6-diaminohexane (0.001 mol) were added thereto and then, dissolved by heating in NMP. In the presence of the reflux device such as a Dean-stark device and the like, after adding this solution prepared by dissolving the methylenephenyl 4,4'-diisocyanate and the 1,6-diaminohexane to the roundbottomed flask containing the NMP solution prepared by dissolving the 4,4-oxydiphthalic anhydride and then, mixing them, 0.001 mol of triethylamine was added thereto and then, heated at 120 °C for 24 hours to prepare a poly(imide-amide) binder with a structure represented by Chemical Formula 4A (Mw: 100,000 g/mol).

[Chemical Formula 4A]

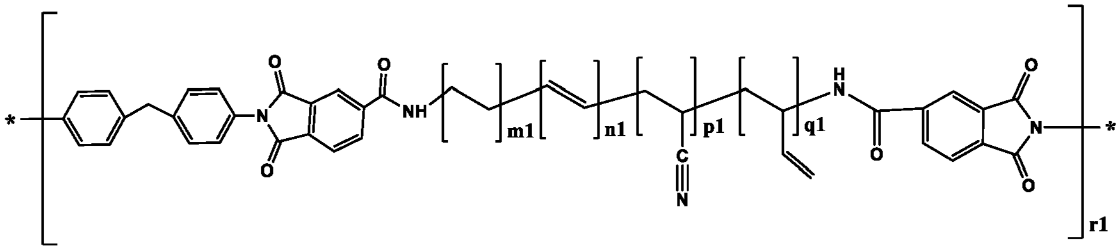

In Chemical Formula 4A, m1, n1, p1, q1, and r1 are equally defined as described above.

**Second Binder Preparation Example** 2

In a 100 mL 2-neck round bottom flask substituted with nitrogen gas, after adding distilled water, 0.005 mol of 4,4-oxydiphthalic anhydride was added thereto and dissolved therein after installing a reflux device. In another 100 mL 1-neck round bottom flask, after adding NMP, methylenediphenyl 4,4'-diisocyanate (0.004 mol) and 1,6-dihexanol (0.001 mol) were added thereto and then dissolved therein by heating. This solution prepared by dissolving the methylenephenyl 4,4'-diisocyanate and the 1,6-dihexanol was added to the round bottom flask containing the NMP solution prepared by dissolving the 4,4-oxydiphthalic anhydride and then, mixed and heated at 120 °C for 24 hours to produce powder, which was a poly(imide-urethane) binder with a structure represented by Chemical Formula 4B (Mw: 150,000 g/mol).

[Chemical Formula 4B]

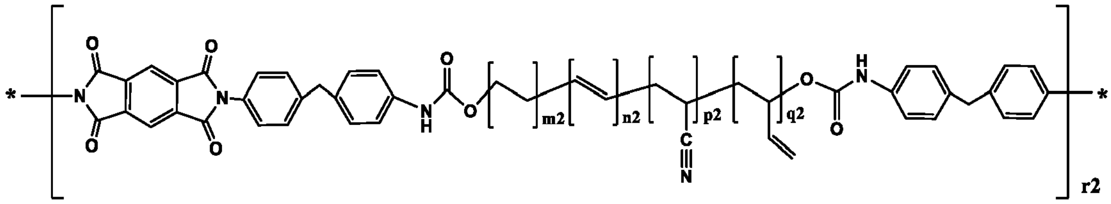

In Chemical Formula 4B, m2, n2, p2, q2, and r2 are equally defined as described above.

**Second Binder Preparation Example 3**

In a 100 mL 2-neck round bottom flask substituted with nitrogen gas, after adding distilled water, 0.005 mol of 4,4-oxydiphthalic anhydride was added thereto and then, dissolved therein by heating after installing a reflux device. In another 100 mL 1-neck round bottom flask, after adding NMP, methylenediphenyl 4,4'-diisocyanate (0.004 mol) and 1,6-diaminohexane (0.001 mol) were added thereto and then, dissolved theretin by heating. This solution prepared by dissolving the methylenephenyl 4,4'-diisocyanate and the 1,6-diaminohexane was added to the round bottom flask containing the NMP solution prepared by dissolving the 4,4-oxydiphthalic anhydride and then, mixed and heated at 120 °C for 24 hours to produce powder, which was a poly(imide-urea) binder with a structure represented by Chemical Formula 4C (Mw: 200,000 g/mol).

[Chemical Formula 4C]

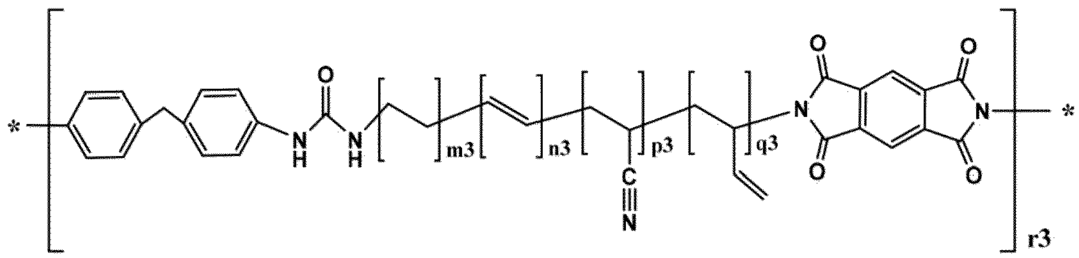

In Chemical Formula 4C, m3, n3, p3, q3, and r3 are equally defined as described above.

**Second Binder Comparative Preparation Example 1**

A poly(urethane-urea) binder represented by Chemical Formula 4D (Mw: 220,000 g/mol) was manufactured by inducing formation of urethane and urea bonds through a condensation polymerization reaction among aromatic diisocyanate, glycol, and diamine.

[Chemical Formula 4D]

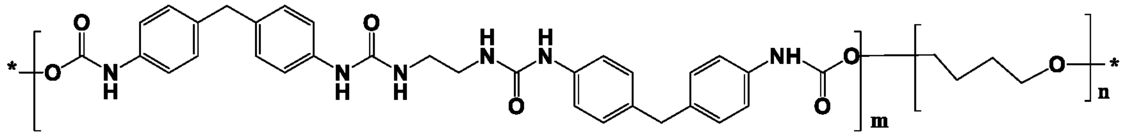

In Chemical Formula 4D, m and n are each independently an integer from 1 to 100.

**Example 1**

A conductive material dispersion was prepared by adding an H-NBR binder (AN (acrylonitrile) ratio: 34 to 35 wt%, HBD (hydrogenated butadiene) ratio: 65 to 66%, Mw: 1,000,000 g/mol) [Product name: BM-451B, Manufacturer: Zeon Chemicals L.P.] and carbon black to an NMP solvent and dispersing them with a PD mixer.

To the conductive material dispersion, a PI (polyimide) binder (Product name: P84, Manufacturer: Evonik Corp.) was added and then, additionally dispersed with the PD mixer to prepare a mixed solution.

Subsequently, $LiFePO_4$ ($D_{50}$ = 1 μ m) was added to the mixed solution and then, mixed to prepare a positive electrode slurry. Herein, in the positive electrode slurry, the addition amounts of each component were adjusted to have 94.0 wt% of $LiFePO_4$, 0.3 wt% of H-NBR, 2.7 wt% of a PI binder, 3.0 wt% of carbon black.

Subsequently, the positive electrode slurry was coated on an aluminum foil and then, dried and compressed to manufacture a positive electrode. Herein, the positive electrode had a loading level of 50 $mg/cm^2$.

A negative electrode slurry was prepared by mixing 97.5 wt% of graphite negative electrode active material, 1.5 wt% of carboxymethyl cellulose, and 1 wt% of styrene butadiene rubber in a water solvent. The negative electrode slurry was coated on a copper foil, dried, and pressed, manufacturing a negative electrode.

The positive and negative electrodes were used with a polytetrafluoroethylene separator and an electrolyte solution prepared by dissolving 1 M $LiPF_6$ in a mixed solvent of ethylene carbonate and dimethyl carbonate in a volume ratio of 3:7 to manufacture a rechargeable lithium battery cell in a common method.

**Example 2**

A positive electrode and a rechargeable lithium battery cell were manufactured substantially in the same manner as in Example 1 except that the poly(imide-amide) binder of Preparation Example 1 was used instead of the PI binder in the manufacture of the positive electrode.

**Example 3**

A positive electrode and a rechargeable lithium battery cell were manufactured substantially in the same manner as in Example 1 except that the poly(imide-amide) binder of Preparation Example 2 was used instead of the PI binder in the manufacture of the positive electrode.

**Example 4**

A positive electrode and a rechargeable lithium battery cell were manufactured substantially in the same manner as in Example 1 except that the poly(imide-amide) binder of Preparation Example 3 was used instead of the PI binder in the manufacture of the positive electrode.

**Comparative Example 1**

A positive electrode and a rechargeable lithium battery cell were manufactured substantially in the same manner

as in Example 1 except that the positive electrode was manufactured by using the PVDF binder alone without using the H-NBR and PI binders and by mixing 94.0 wt% of $LiFePO_4$, 3.0 wt% of the PVDF binder, and 3.0 wt% of carbon black in an NMP solvent to prepare a positive electrode slurry to manufacture in the manufacture of the positive electrode.

## Comparative Example 2

A positive electrode and a rechargeable lithium battery cell were manufactured substantially in the same manner as in Example 1 except that the positive electrode was manufactured by using the PI binder alone without using the H-NBR binder and mixing 94.0 wt% of $LiFePO_4$, 3.0 wt% of the PL binder, and 3.0 wt% of carbon black in an NMP solvent to prepare a positive electrode slurry in the manufacture of the positive electrode.

## Comparative Example 3

A positive electrode and a rechargeable lithium battery cell were manufactured substantially in the same manner as in Example 1 except that the contents of the H-NBR and PI binders were changed respectively to 2.0 wt% and 1.0 wt% in the positive electrode slurry in the manufacture of the positive electrode.

## Comparative Example 4

A positive electrode and a rechargeable lithium battery cell were manufactured substantially in the same manner as in Example 1 except that the contents of the H-NBR and PI binders were changed respectively to 2.5 wt% and 0.5 wt% in the positive electrode slurry in the manufacture of the positive electrode.

## Comparative Example 5

A positive electrode and a rechargeable lithium battery cell were manufactured substantially in the same manner as in Example 1 except that the contents of the H-NBR and PI binders were changed respectively to 0.1 wt% and 2.9 wt% in the positive electrode slurry in the manufacture of the positive electrode.

## Comparative Example 6

A positive electrode and a rechargeable lithium battery cell were manufactured substantially in the same manner as in Example 1 except that the contents of the H-NBR and PI binders were changed respectively to 0.2 wt% and 2.8 wt% in the positive electrode slurry in the manufacture of the positive electrode.

## Evaluation Example 1: IR Evaluation

Each second binder according to Preparation Examples 1 and 3 were checked with respect to a structure by using infrared spectroscopy (IR). The IR analysis result of the binder of Preparation Example 1 is shown in FIG. 5, and the IR analysis result of the binder of Preparation Example 3 is shown in FIG. 6.

Referring to FIG. 5, characteristic peaks of a C=O functional group in an imide group was confirmed at 1770 $cm^{-1}$, and a C=O functional group in an amide group was confirmed at 1710 $cm^{-1}$. Accordingly, the binder of Preparation Example 1 turned out to be a poly(imide-amide)-based binder including the imide group an the amide group in the structure.

Referring to FIG. 6, the characteristic peaks of the C=O functional group in imide was conformed at 1770 $cm^{-1}$, and the C=O functional group in urea was conformed at 1730 $cm^{-1}$. Accordingly, the binder of Preparation Example 3 turned out to be a poly(imide-urea)-based binder.

## Evaluation Example 2: Evaluation of Adhesion and Compressibility

In order to evaluate adherence of positive electrode plates, each of the positive electrodes of Examples 1 and 2 and Comparative Examples 1 to 6 were measured with respect to adhesive strength with a universal testing machine by adhering a double-sided adhesive tape on a positive electrode active material layer formed on a positive electrode current collector and peeling it off to 180 ° at 25 mm/min, and the results are shown in Table 1. In addition, the electrode plates were measured with respect to a maximum compression density in a method of compressing them in a simple compressor and measuring a weight and a thickness of the electrode plates, and the results are shown in Table 1.

(Table 1)

| | Adhesion [gf/mm] | Compression density [g/cc] |
|---|---|---|
| Example 1 | 1.1 | 2.6 |
| Example 2 | 1.0 | 2.5 |
| Comparative Example 1 | 0.8 | 2.5 |
| Comparative Example 2 | 1.3 | 2.2 |
| Comparative Example 3 | 0.6 | 2.5 |
| Comparative Example 4 | 0.4 | 2.5 |
| Comparative Example 5 | 1.3 | 2.0 |
| Comparative Example 6 | 1.1 | 2.2 |

Referring to Table 1, the positive electrodes of Examples 1 and 2 exhibited high adhesive strength of electrode plates and high compression density, thereby excellent adhesion and compressibility.

On the other hand, the positive electrodes of Comparative Examples 1 to 6, compared with the positive electrodes of Examples 1 and 2, exhibited low adhesive strength of electrode plates or low compression density.

**Evaluation Example 3: Resistance Evaluation**

The positive electrode plates of Examples 1 and 2 and Comparative Example 1 were measured with respect to mixture resistance and interfacial resistance at room temperature by using an electrode resistance measurement system RM2610, and the results are shown in FIGS. 7 and 8.

Referring to FIGS. 7 and 8, Comparative Example 1, whose positive electrode slurry was prepared by using PVDF alone as a binder, exhibited very high mixture resistance and interfacial resistance of an electrode plate.

In comparison, Examples 1 and 2, whose positive electrode slurry was prepared by using a second binder such as polyimide (PI) or poly(imide-amide) as well as H-NBR as a binder, exhibited significantly low mixture resistance and interfacial resistance of an electrode plate. This is presumed to be that dispersibility of a conductive material was much more improved by introducing a conductive material dispersion process of preparing a conductive material dispersion by first mixing H-NBR as a first binder with the conductive material in the manufacturing process of the positive electrode slurry. In particular, compared with Example 1 using H-NBR and polyimide as a binder, Example 2 using H-NBR and poly(imide-amide) as a binder, exhibited much low mixture resistance and interfacial resistance of an electrode plate.

**Evaluation Example 4: Evaluation of Expansion Rate and Elastic Elongation for Electrolyte Solution**

In order to evaluate an expansion rate for an electrolyte solution, the PI binder used in Example 1 and each binder prepared in Preparation Examples 1 to 3 were dried at 130 °C and formed into films. The films were immersed in an electrolyte solution prepared by dissolving 1 M $LiPF_6$ in a solvent of ethylene carbonate and dimethyl carbonate mixed in a volume ratio of 3:7 and then, stored at 70 °C for 72 hours to measure weights after swollen. Each expansion rate (swelling ratio) P for the electrolyte solution was calculated according to Equation 1.

[Equation 1]

$$P = (P2-P1)/P1 \times 100$$

In Equation 1, P1 represents a film weight before expansion, and P2 represents a film weight after expansion.

In addition, in order to evaluate elastic elongation for the electrolyte solution, the PI binder used in Example 1 and each binder prepared in Preparation Examples 1 to 3 were dried at 130 °C and formed into films, and the films were immersed in the electrolyte solution and then soaked therein at 60 °C for 24 hours. Subsequently, the films were taken out and then, stretched at a grip separation speed of 5 mm/min in UTM (universal testing machine) to measure a stretched length, which was used to calculate the elastic elongation E according to Equation 2.

[Equation 2]

$$E = (E2-E1)/E1 \times 100$$

In Equation 2, E2 represents a film length after elongation, and E1 represents a film length before elongation.

The expansion rate and elastic elongation evaluation results for the above electrolyte solution are shown in Table 2.

(Table 2)

| | Expansion rate (wt%) | Elastic elongation (%) |
|---|---|---|
| PI binder used in Example 1 | 30 | 10 |
| Preparation Example 1 | 28 | 50 |
| Preparation Example 2 | 28 | 100 |
| Preparation Example 3 | 33 | 120 |
| Comparative Preparation Example 1 | 40 | - |

Referring to Table 2, when the PI binder used in Example 1 and each binder prepared in Preparation Examples 1 to 3 were used, it was confirmed to be a low expansion rate for the electrolyte solution and excellent elastic elongation.

On the other hand, when the binder of Comparative Preparation Example 1 was used, there was problem that a film was g broken, when immersed in and taken out of the electrolyte solution for 24 hours, which made it impossible to measure elastic elongation for the electrolyte solution.

**Evaluation Example 5: Evaluation of Bending Strength**

Each of the rechargeable lithium battery cells of Examples 1 to 4 and Comparative Examples 1 to 4 was measured with respect to bending strength by using a three-point bending analysis device, and the results are shown in Table 3.

(Table 3)

| | 3-point bending strength (N) |
|---|---|
| Example 1 | 1.1 |
| Example 2 | 0.9 |
| Example 3 | 0.8 |
| Example 4 | 0.8 |
| Comparative Example 1 | 1.1 |
| Comparative Example 2 | 1.4 |
| Comparative Example 3 | 1.3 |
| Comparative Example 4 | 1.3 |

Referring to Table 3, the rechargeable lithium battery cells of Examples 1 to 4, compared with the rechargeable lithium battery cells of Comparative Example 1 to 4, exhibited equivalent or lower bending strength and excellent flexibility. Accordingly, the rechargeable lithium battery cells of Examples 1 to 4 were able to be compressed due to the excellent flexibility, thereby ensuring excellent compressibility.

**Evaluation Example 6: Evaluation of Cycle-life Characteristics**

The rechargeable lithium battery cells of Examples 1 to 4 Comparative Example 1 to 4 were constant current-charged to 4.20 V (vs. Li) at a rate of 0.2 C at 25 °C. Subsequently, the cells were constant current-discharged to 2.8 V (vs. Li) at a rate of 0.2 C.

After the formation, the rechargeable lithium battery cells were constant current-charged to 4.20 V (vs. Li) at a rate

of 1.0 C at 25 °C. Subsequently, the cells were constant current-discharged to 2.8 V (vs. Li) at a rate of 0.5 (1st cycle). This charge and discharge cycle was 300 times repeated. In every charge and discharge cycle, a 10-minute pause was provided after each charge/discharge cycle.

The above charge and discharge experiment results are shown in Table 4, and a capacity retention rate at the 300th cycle is defined by Equation 2.

$$\text{Capacity retention rate (\%)} = (\text{discharge capacity at 300th cycle}/\text{discharge capacity at 1st cycle}) \times 100 \quad \text{[Equation 2]}$$

(Table 4)

| | Capacity retention rate (%, @ 300 cycle) | Cell DCIR (mOhm) |
|---|---|---|
| Example 1 | 96.0 | 17.3 |
| Example 2 | 96.1 | 17.0 |
| Example 3 | 96.3 | 16.7 |
| Example 4 | 96.4 | 17.1 |
| Comparative Example 1 | 95.5 | 17.3 |
| Comparative Example 2 | 95.0 | 17.4 |
| Comparative Example 3 | 94.5 | 17.9 |
| Comparative Example 4 | 94.0 | 17.8 |

Referring to Table 4, the rechargeable lithium battery cells of Examples 1 to 4, compared with the rechargeable lithium battery cells of Comparative Examples 1 to 4, exhibited a high capacity retention rate and overall low DCIR and thus excellent cycle-life characteristics.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |
| 101: | positive electrode current collector | | |
| 102: | positive electrode active material layer | | |

## Claims

**1.** A positive electrode (10), comprising

a positive electrode current collector (101); and
a positive electrode active material layer (102) located on the positive electrode current collector and including a positive electrode active material, a binder, and a conductive material;
wherein the binder comprises a first binder and a second binder,
the first binder comprises a hydrogenated nitrile butadiene rubber,
the second binder comprises an imide-based binder, and
the positive electrode active material layer (102) comprises about 300 to about 1,300 parts by weight of the

second binder based on 100 parts by weight of the first binder.

2. The positive electrode (10) as claimed in claim 1, wherein the first binder is a positive electrode (10) has a weight average molecular weight (Mw) of about 100,000 g/mol to about 2,000,000 g/mol.

3. The positive electrode (10) as claimed in claim 1 or claim 2, wherein the hydrogenated nitrile butadiene rubber comprises about 20 to about 40 wt% of acrylonitrile or methacrylonitrile.

4. The positive electrode (10) as claimed in any one of claims 1 to 3, wherein the second binder comprises polyimide, poly(imide-amide), poly(imide-urethane), poly(imide-urea), or a combination thereof.

5. The positive electrode (10) as claimed in any one of claims 1 to 4, wherein the second binder comprises at least one of a structure represented by Chemical Formula 1A and a structure represented by Chemical Formula 1B:

[Chemical Formula 1A]

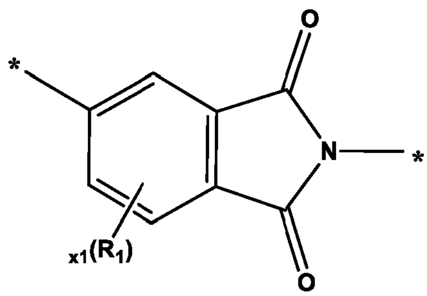

wherein, in Chemical Formula 1A, $R_1$ represents hydrogen, deuterium, or a substituted or unsubstituted alkyl group, x1 is an integer from 0 to 3, and * represents a linking portion. [Chemical Formula 1B]

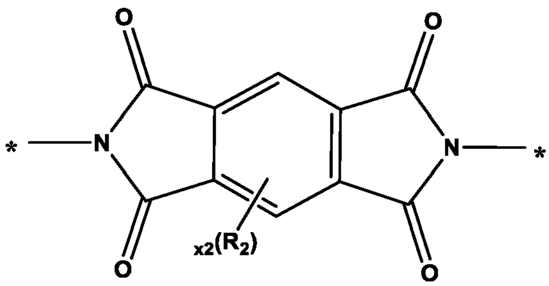

wherein, in Chemical Formula 1B, $R_2$ is hydrogen, deuterium, or a substituted or unsubstituted alkyl group, x2 is an integer from 0 to 2, and * represents a linking portion.

6. The positive electrode (10) as claimed in any one of claims 1 to 5, wherein

the second binder comprises at least one of a structure represented by Chemical Formula 2A and a structure represented by Chemical Formula 2B:

[Chemical Formula 2A]

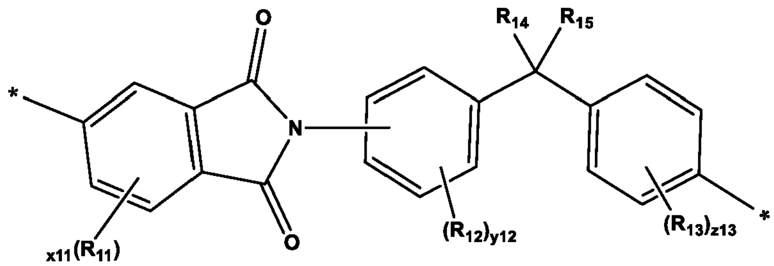

wherein, in Chemical Formula 2A, $R_{11}$ to $R_{15}$ are each independently hydrogen, deuterium, or a substituted or unsubstituted alkyl group, x11 is an integer ranging from 0 to 3, y12 and z13 are each independently an integer ranging from 0 to 4, and * represents a linking portion,

[Chemical Formula 2B]

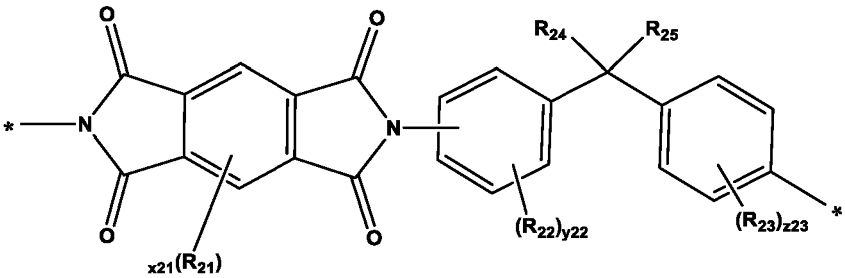

wherein, in Chemical Formula 2B, $R_{21}$ to $R_{25}$ are each independently hydrogen, deuterium, or a substituted or unsubstituted alkyl group, x21 is an integer ranging from 0 to 2, y22 and z23 are each independently an integer ranging from 0 to 4, and * represents a linking portion.

**7.** The positive electrode (10) as claimed in any one of claims 1 to 6, wherein the second binder has an expansion coefficient P value with respect to the electrolyte solution of about 10 wt% to about 50 wt%.

**8.** The positive electrode (10) as claimed in any one of claims 1 to 7, wherein the second binder has an elastic elongation of about 10% to about 200% after immersion in an electrolyte solution for 24 hours.

**9.** The positive electrode (10) as claimed in any one of claims 1 to 8, wherein

the positive electrode active material layer (102) comprises about 3 to about 20 wt% of the first binder based on 100 wt% of the total of the first binder and the second binder; and/or
wherein
the positive electrode active material layer (102) comprises about 80 to about 97 wt% of the second binder based on 100 wt% of the total of the first binder and the second binder.

**10.** The positive electrode (10) as claimed in any one of claims 1 to 9, wherein the positive electrode active material comprises a lithium transition metal composite oxide.

**11.** The positive electrode (10) as claimed in any one of claims 1 to 10, wherein

the positive electrode active material comprises a lithium composite phosphate, and
the lithium composite phosphate is at least one compound represented by Chemical Formulas 11 to 15:

[Chemical Formula 11] $Li_{a1}Fe_{(1-s1)}M^1_{s1}PO_4$

wherein, in Chemical Formula 11, 0.90≤a1≤1.5, 0≤s1≤0.4, and $M^1$ is Al, Ca, Ce, Cr, Cu, La, Mg, Mn, Mo, Nb, Ni, Sn, Sr, Ti, V, W, Y, Zn, Zr, or a combination thereof,

[Chemical Formula 12] $Li_{a2}Mn_{s2}Fe_{(1-s2-t2)}M^2_{t2}PO_4$

wherein, in Chemical Formula 12, 0.90≤a2≤1.5, 0.1≤s2≤0.9, 0≤t2≤0.9, and $M^2$ is Al, Ca, Ce, Cr, Cu, La, Mg, Mo, Nb, Ni, Sn, Sr, Ti, V, W, Y, Zn, Zr, or a combination thereof,

[Chemical Formula 13] $Li_{a3}Mn_{(1-s3)}M^3_{s3}PO_4$

wherein, in Chemical Formula 13, 0.90≤a3≤1.5, 0≤s3≤0.4, and $M^3$ is Al, Ca, Ce, Cr, Cu, La, Mg, Mo, Nb, Ni, Sn, Sr, Ti, V, W, Y, Zn, Zr, or a combination thereof,

[Chemical Formula 14] $Li_{a4}Ti_{(2-s4)}M^4_{s4}(PO_4)_3$

wherein, in Chemical Formula 14, 0.90≤a4≤1.5, 0≤s4≤0.4, and $M^4$ is Al, Ca, Ce, Cr, Cu, La, Mg, Mo, Nb, Ni, Sn, Sr, V, W, Y, Zn, Zr, or a combination thereof,

[Chemical Formula 15] $Li_{a5}Ti_{(1-s5)}M^5_{s5}PO_5$

wherein, in Chemical Formula 15, 0.90≤a5≤1.5, 0≤s5≤0.4, and $M^5$ is Al, Ca, Ce, Cr, Cu, La, Mg, Mo, Nb, Ni, Sn, Sr, V, W, Y, Zn, Zr, or a combination thereof.

**12.** The positive electrode (10) as claimed in any one of claims 1 to 11, wherein the first binder and the second binder do not comprise fluorine.

**13.** A method of preparing a positive electrode (10), comprising

preparing a positive electrode slurry including a positive electrode active material, a binder, and a conductive material,
coating the positive electrode slurry on the positive electrode current collector (101) to form a positive electrode (10),
wherein the binder comprises a first binder and a second binder,
the first binder comprises a hydrogenated nitrile butadiene rubber,
the second binder comprises an imide-based binder, and
the positive electrode slurry comprises about 300 to about 1,300 parts by weight of the second binder based on 100 parts by weight of the first binder.

**14.** The method as claimed in claim 13, wherein

the positive electrode slurry is prepared by
mixing a first binder, a conductive material, and a solvent to prepare a dispersibility of a conductive material,
adding a second binder to the dispersibility of a conductive material to prepare a mixed solution, and
mixing a positive electrode active material into the mixed solution.

**15.** A rechargeable lithium battery (100), comprising

the positive electrode (10) as claimed in any one of claims 1 to 12; a negative electrode (20); and
an electrolyte.

FIG. 1

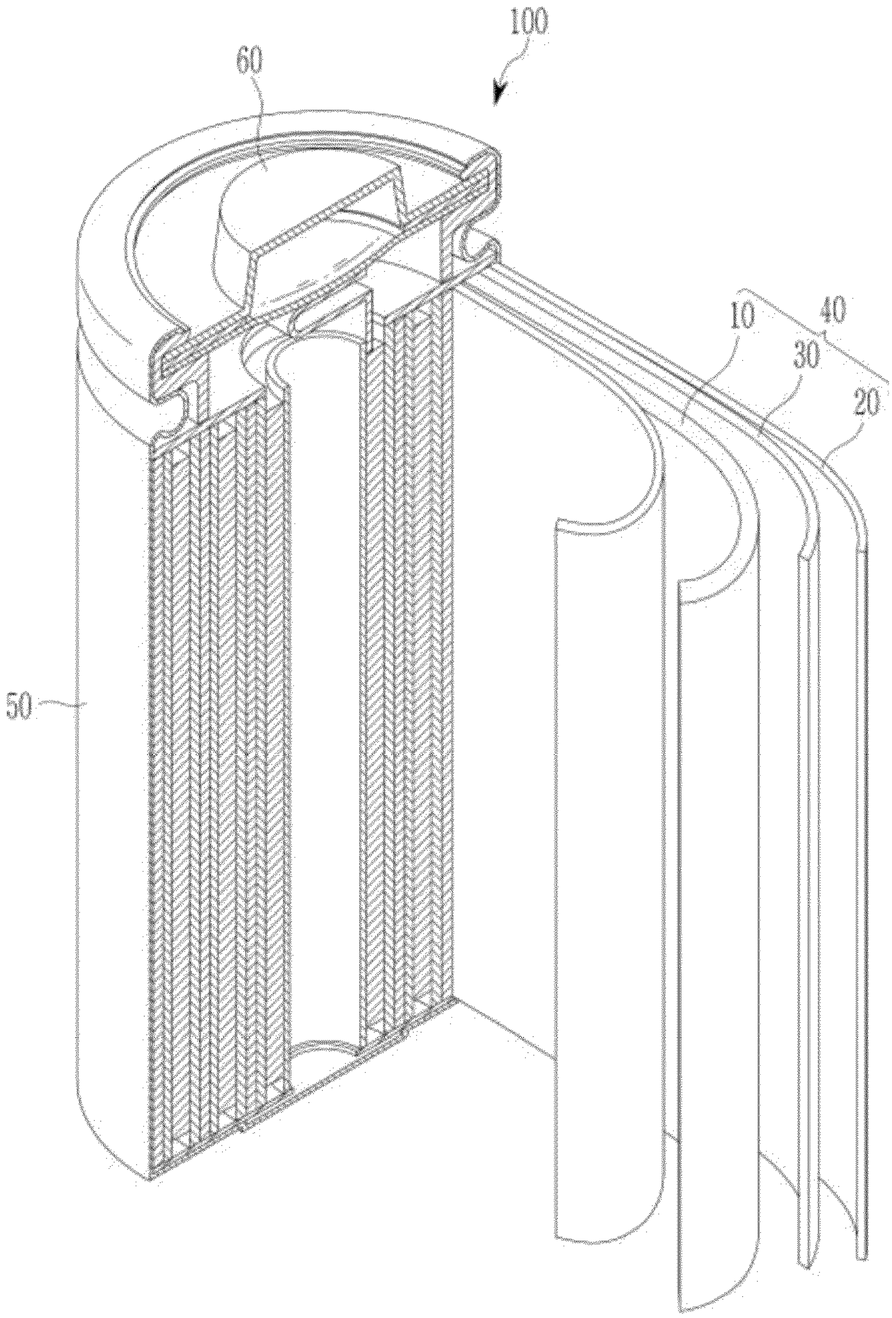

FIG. 2

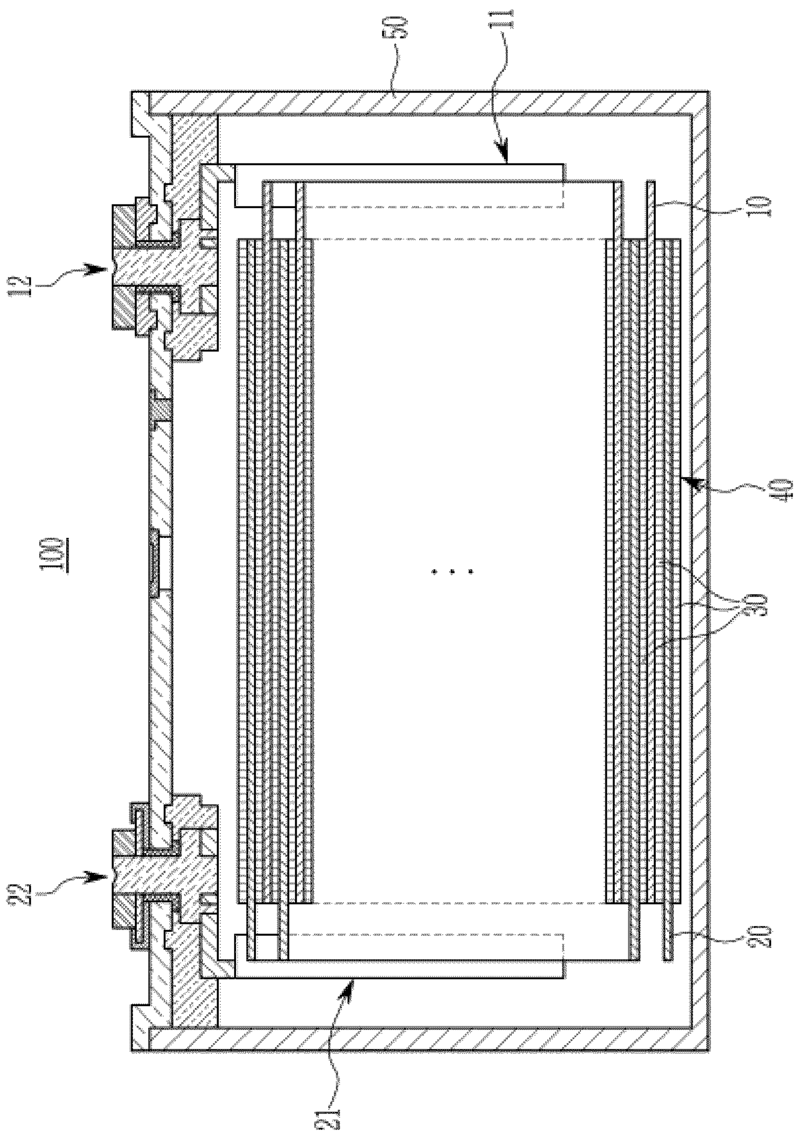

FIG. 3

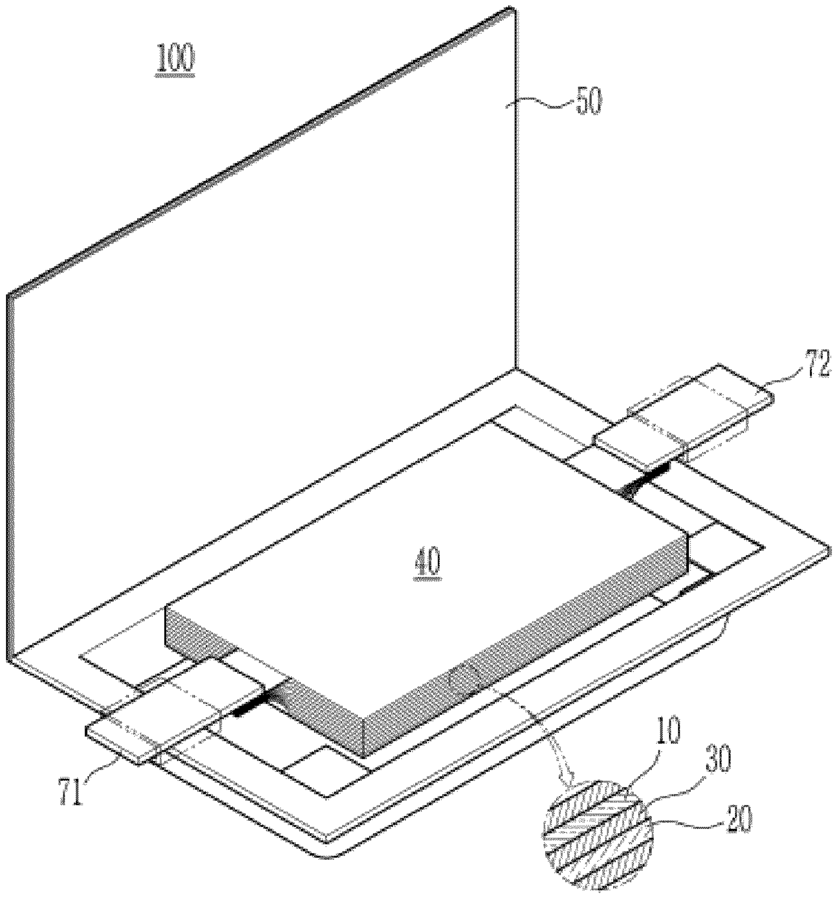

FIG. 4

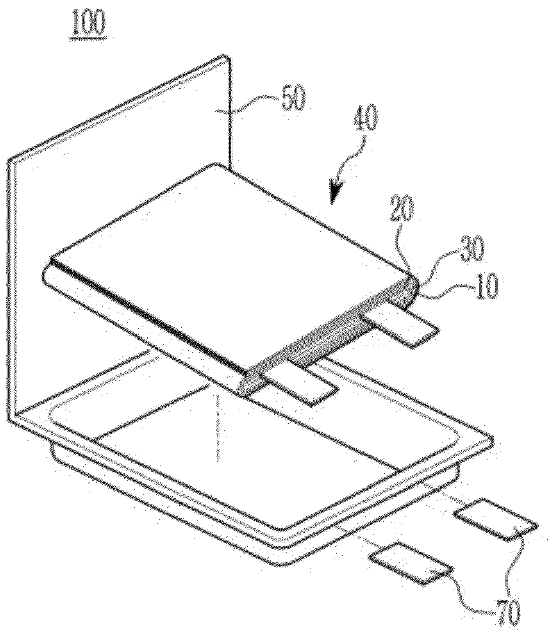

FIG. 5

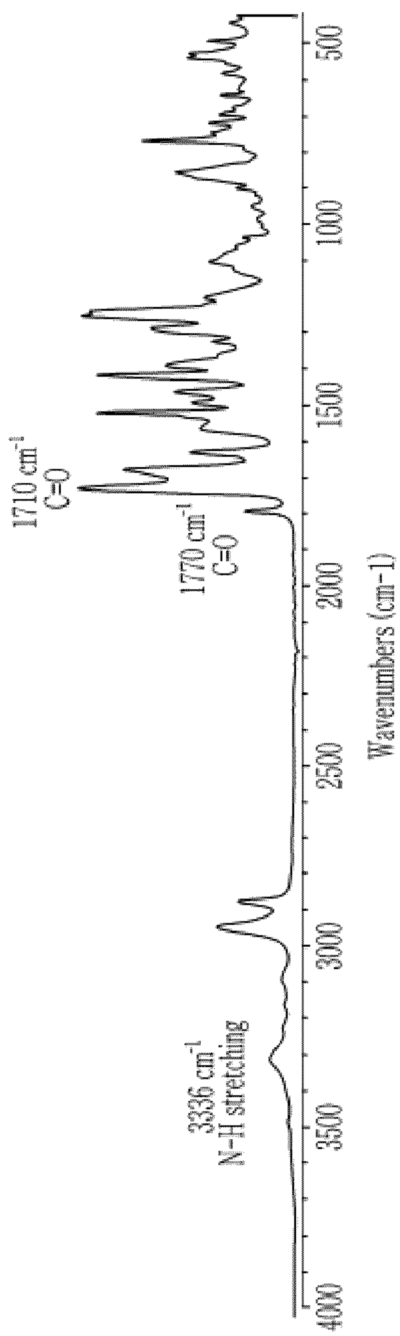
1710 cm-1
C=O
1770 cm-1
C=O
3336 cm-1
N-H stretching
4000
3500
3000
2500
2000
1500
1000
500
Wavenumbers (cm-1)

FIG. 6

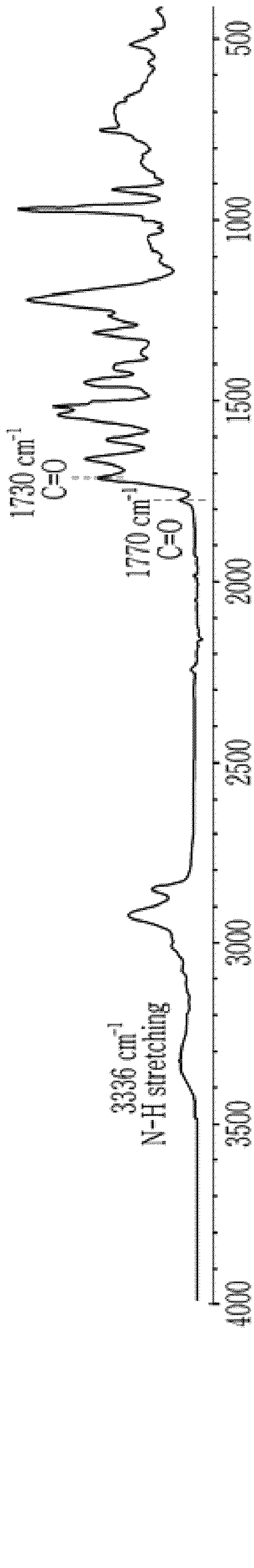
3336 cm-1
N-H stretching
1730 cm-1
C=O
1770 cm-1
C=O
4000
3500
3000
2500
2000
1500
1000
500

FIG. 7

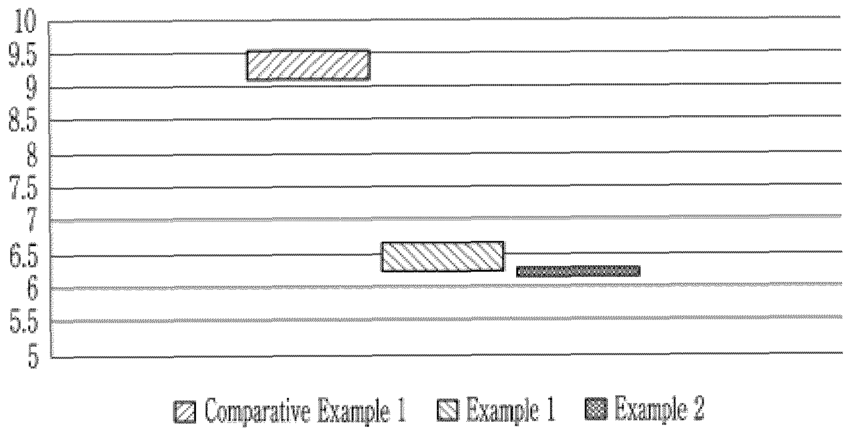
10
9.5
9
8.5
8
7.5
7
6.5
6
5.5
5
Comparative Example 1
Example 1
Example 2

FIG. 8

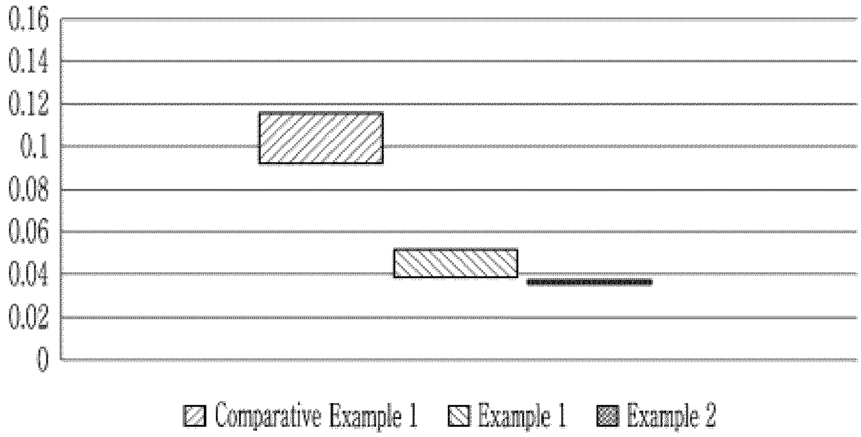
0.16
0.14
0.12
0.1
0.08
0.06
0.04
0.02
0
Comparative Example 1
Example 1
Example 2

FIG. 9

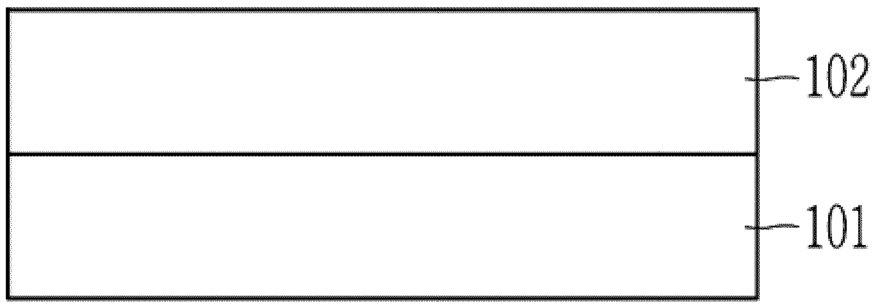

Europäisches Patentamt
European Patent Office
Office européen des brevets

# EUROPEAN SEARCH REPORT

Application Number
EP 25 18 3554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 118 198 367 A (UNIV QINGDAO SCIENCE & TECHNOLOGY) 14 June 2024 (2024-06-14)<br>* the whole document *<br>----- | 1-15 | INV.<br>H01M4/62<br>H01M4/04<br>H01M4/131<br>H01M4/136<br>H01M4/1391<br>H01M4/1397<br>H01M10/0525<br><br>ADD.<br>H01M4/02 |
| A | CN 116 598 424 A (CALB GROUP CO LTD)<br>15 August 2023 (2023-08-15)<br>* the whole document *<br>----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 16 October 2025 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 3554

This annex lists the patent family members relating to the patent documents cited in the above-mentioned European search report. The members are as contained in the European Patent Office EDP file on
The European Patent Office is in no way liable for these particulars which are merely given for the purpose of information.

16-10-2025

| Patent document cited in search report | Publication date | Patent family member(s) | Publication date |
|---|---|---|---|
| CN 118198367 A | 14-06-2024 | NONE | |
| CN 116598424 A | 15-08-2023 | NONE | |

EPO FORM P0459

For more details about this annex : see Official Journal of the European Patent Office, No. 12/82